# EUROPEAN PATENT APPLICATION

(11) **EP 1 324 630 A2**
(43) Date of publication of application: **02.07.2003**
(21) Application number: 02009283.9
(22) Date of filing: 29.04.2002
(51) Int. Cl.: H04Q 11/00

(54) **Optical path cross connect apparatus and switching method thereof**

(30) Priority: 27.12.2001 JP 2001396247
(71) Applicant: FUJITSU LIMITED, Kawasaki-shi, Kanagawa 211-8588 (JP)
(72) Inventor: Sugitani, Kiichi, Fujitsu Kyushu Dig. Tech. Ltd., Fukuoka-shi, Fukuoka 812-0011 (JP); Kuroyanagi, Satoshi, Fujitsu Limited, Kawasaki-shi, Kanagawa 211-8588 (JP)
(74) Representative: HOFFMANN - EITLE

(57) **Abstract**

An optical path cross connect apparatus employs an economical 1x2 optical switches instead of expensive optical amplifiers, realizing an economical apparatus and suppressing dimensions of the apparatus, a dummy optical signal that realizes a reliable switching from a system in service to a standby system when a fault occurs in the system in service, and a switching method provides a method to replace an optical switch and to insert an optical amplifier, if required, while continuing communication services.

## Description

### BACKGROUND OF THE INVENTION

### 1. Field of the Invention

The present invention generally relates to an optical path cross connect apparatus and a switching method thereof, and especially relates to the optical path cross connect apparatus having a redundant configuration, and the switching method thereof.

### 2. Description of the Related Art

With demands for a higher-speed data transmission and a larger volume data, networks and transmission systems need to be capable of handling a wide band, hence, a large capacity and high-speed transmission. To cope with the demands, an optical network based on WDM technology has been desired. The core of the optical network is an optical path cross connect apparatus that divides a wavelength-multiplexed optical signal input from a plurality of input optical fibers by wavelength, carries out cross connection of the divided optical signals, multiplexes the cross connected signals by wavelength, and outputs to output optical fibers.

Since an optical transmission system handles a large volume of data, a failure in operation causes a massive influence to a large number of users. In this view, optical transmission systems are configured with redundancy such that reliability is enhanced.

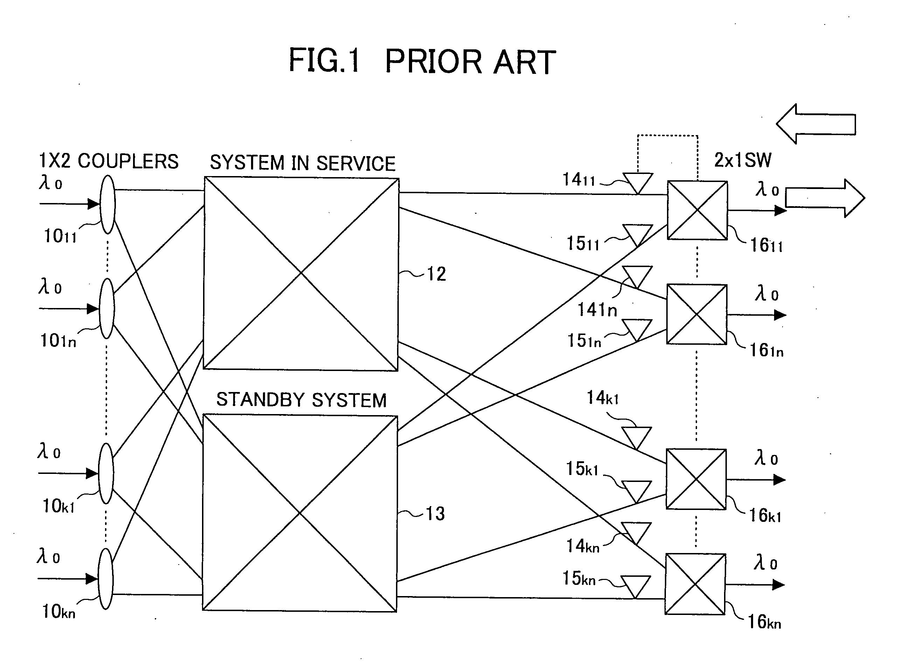

Fig. 1 shows a block diagram of an example of a conventional optical path cross connect apparatus with a redundant configuration. In this figure, k optical signals, each wavelength-multiplexed by n channels, are input through k optical fibers, that is, there are kxn optical signals. Each of the optical signals is divided into two streams by each of 1x2 optical couplers 10₁₁-10ₖₙ. Each of the two streams is supplied to an OSW (optical matrix switch) 12, which is a system 0 and in service, and OSW 13, which is a system 1 and in standby. Each of the OSW 12 and the OSW 13 carries out cross connection. Output signals from the OSW 12 and the OSW 13 are monitored by monitoring units 14₁₁-14ₖₙ and 15₁₁-15ₖₙ, respectively, such that a failure, if one occurs, is detected, 2x1 optical switches 16₁₁-16ₖₙ are controlled, and switching between the system 0 and the system 1 is carried out. Here, λ₀ in the figure expresses arbitrary wavelength.

In the conventional optical path cross connect apparatus, each of the 1x2 optical couplers 10₁₁-10ₖₙ generates a principle loss of 3dB, which is a burden to a system. To compensate the loss, insertion of an optical amplifier is needed either before each of the 1x2 optical couplers 10₁₁-10ₖₙ, or after each of the 2x1 switches 16₁₁-16ₖₙ, raising cost and increasing dimensions of the apparatus.

Further, some matrix type OSWs (optical matrix switches) require an optical input always. In this case, switching from a system in service to a standby system, when a fault occurs, is not correctly performed.

Furthermore, with the conventional optical path cross connect apparatus shown in Fig. 1, if insertion of an optical amplifier is needed, for example, due to increase in loss, etc., when switch capacity is to be increased, service has to be intercepted in order to insert the optical amplifier, that is, there is a problem of the optical path cross connect stopping communication services.

### SUMMARY OF THE INVENTION

It is a general object of the present invention to provide an optical path cross connect apparatus and a switching method thereof that substantially obviates one or more of the problems caused by the limitations and disadvantages of the related art.

The present invention made in view of the above-mentioned points aims at providing an optical path cross connect apparatus and a switching method thereof, which dispenses with an optical amplifier, prevents cost and size from increasing, secures continuous operation by a standby system when a failure occurs in a main system, and allows an in-service upgrading.

Features and advantages of the present invention will be set forth in the description which follows, and in part will become apparent from the description and the accompanying drawings, or may be learned by practice of the invention according to the teachings provided in the description. Objects as well as other features and advantages of the present invention will be realized and attained by the optical path cross connect apparatus and the switching method thereof particularly pointed out in the specification in such full, clear, concise, and exact terms as to enable a person having ordinary skill in the art to practice the invention.

To achieve these and other advantages and in accordance with the purpose of the invention, as embodied and broadly described herein, the invention provides a number of variations of an improved optical path cross connect apparatus, such as a variation where a low-loss optical switch is employed, dispensing with insertion of an optical amplifier, thereby cost and size of the apparatus are prevented from increasing; a dummy optical signal is applied such that correct switching to a standby system, hence continuous operation, is ensured; a method to replace an OSW (optical matrix switch) and to insert an optical amplifier, if required, while service continues by redundant components; and so on.

### BRIEF DESCRIPTION OF THE DRAWINGS

Fig. 1 is a block diagram of an example of a conventional optical path cross connect apparatus with a redundant configuration;
Fig. 2 is a block diagram of the optical path cross connect apparatus with a redundant configuration of a first embodiment of the present invention;
Fig. 3 is a block diagram of the optical path cross connect apparatus with a redundant configuration of the first embodiment of the present invention;
Fig. 4 is a block diagram of the optical path cross connect apparatus with a redundant configuration of a second embodiment of the present invention;
Fig. 5 is a block diagram of the optical path cross connect apparatus with a redundant configuration of the second embodiment of the present invention;
Fig. 6 is a block diagram of a main part of the optical path cross connect apparatus with a redundant configuration of the third embodiment of the present invention;
Fig. 7 is a block diagram of a main part of the optical path cross connect apparatus with a redundant configuration of the fourth embodiment of the present invention;
Fig. 8 is a block diagram of a main part of the optical path cross connect apparatus with a redundant configuration of the fifth embodiment of the present invention;
Fig. 9 is a block diagram of the optical path cross connect apparatus with a redundant configuration of the sixth embodiment of the present invention;
Fig. 10 is a block diagram of the optical path cross connect apparatus with a redundant configuration of the sixth embodiment of the present invention;
Fig. 11 is a block diagram of the optical path cross connect apparatus with a redundant configuration of the sixth embodiment of the present invention;
Fig. 12 is a block diagram of a main part of the optical path cross connect apparatus with a redundant configuration of the seventh embodiment of the present invention;
Fig. 13 is a block diagram of a main part of the optical path cross connect apparatus with a redundant configuration of the eighth embodiment of the present invention;
Fig. 14 is a block diagram of a variation of an OSW used in the present invention;
Fig. 15 is a block diagram of a WDM interface, to which the optical path cross connect apparatus with a redundant configuration of the present invention is applied;
Fig. 16(A), Fig. 16(B), Fig. 16(C) and Fig. 16(D) are figures for explaining a first embodiment of a switching method of the optical path cross connect apparatus with a redundant configuration of the present invention;
Fig. 17(A), Fig. 17(B), Fig. 17(C) and Fig. 17(D) are figures for explaining a second embodiment of the switching method of the optical path cross connect apparatus with a redundant configuration of the present invention; and
Fig. 18(A), Fig. 18(B), Fig. 18(C) and Fig. 18(D) are figures for explaining a third embodiment of the switching method of the optical path cross connect apparatus with a redundant configuration of the present invention.

### DESCRIPTION OF THE PREFERRED EMBODIMENTS

In the following, embodiments of the present invention will be described with reference to the accompanying drawings.

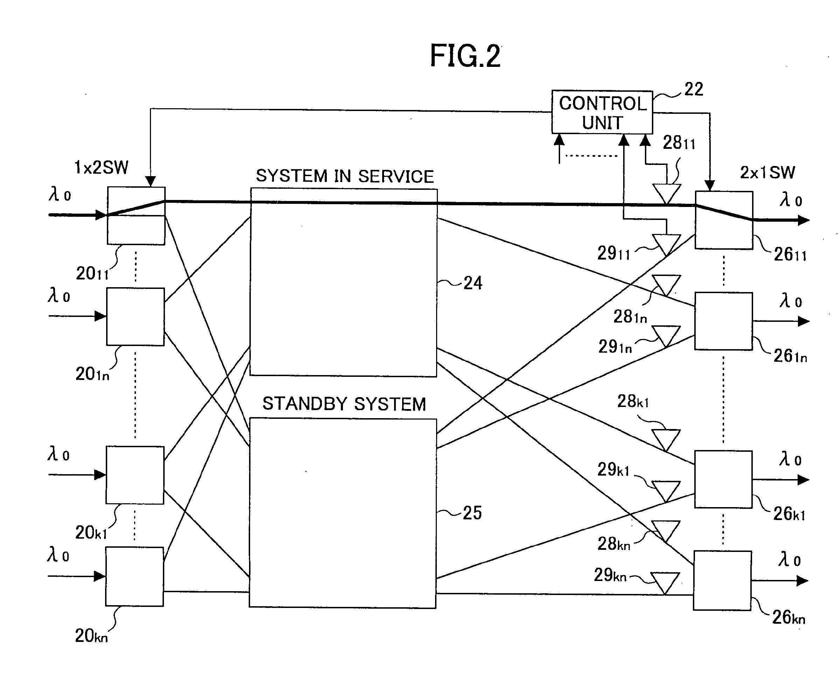

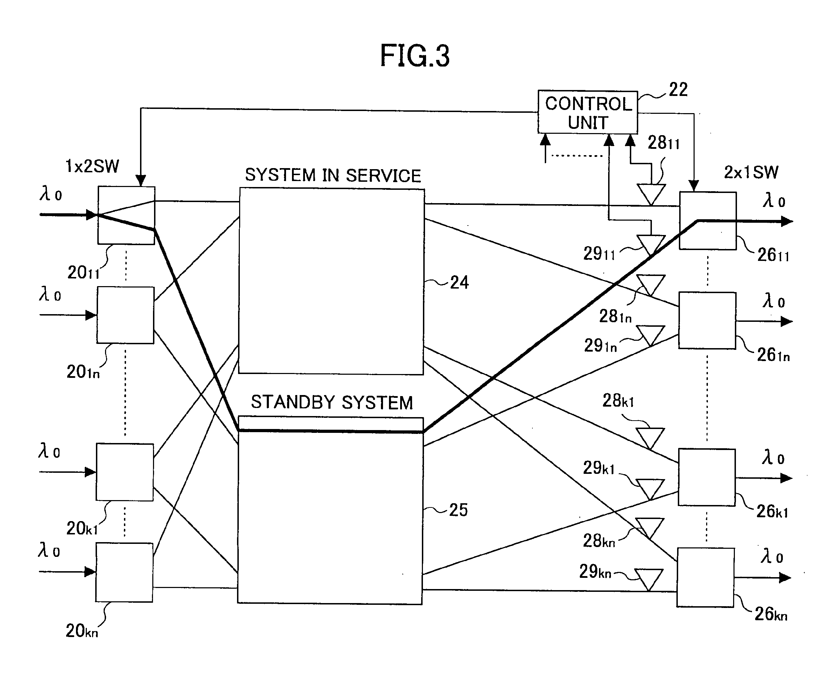

Fig. 2 and Fig. 3 show a block diagram of a first embodiment of an optical path cross connect apparatus with a redundant configuration of the present invention. In Fig. 2, each of k optical fibers (k=8, for example) supplies an optical signal carrying n signals (n=32, for example) by wavelength multiplexing. That is, a total of kxn signals are input to the optical path cross connect apparatus, each of the kxn signals being supplied to each of 1x2 switches 20₁₁-20ₖₙ. Each of the 1x2 switches 20₁₁₋ 20ₖₙ divides the input signal into two branches in one of distribution ratios of 1:p (1<p) and p:1, by control of a control unit 22, and supplies each of the branched signals to each of OSW (optical matrix switch) 24, as a serving system 0, and OSW 25, as a standby system 1. Here, λ₀ in the figures expresses arbitrary wavelength.

The 1x2 switches 20₁₁-20ₖₙ are configured by a semiconductor element such as a PLC that performs switching by locally heating an arm of a Mach-Zehnder interferometer structured with a substrate type waveguide, an LN that performs switching by applying an electric field to a directional optical coupler formed in an LiNbO₃ crystal, and a carrier injection type optical switch. A criterion of the 1, that is, the base coefficient of the above-mentioned distribution ratios 1:p and p:1 preferably represents a minimum optical power level that can be monitored by a monitoring unit in a later stage. The other coefficient p of the distribution ratios 1:p and p:1 is several tens to 100 times a large as 1. Usually, an optical signal of the distribution coefficient 1 is supplied to OSW 25, the standy system 1, and the optical signal of the distribution coefficient p is supplied to OSW24, the working system 0. Here, as for the OSW 24 and the OSW 25, MEMS (Micro Electro Mechanical System) is used, for example.

Optical signals that are cross connected by the OSW 24 and the OSW 25 are supplied to 2x1 switches 26₁₁-26ₖₙ, while being monitored by monitoring units 28₁₁-28ₖₙ and 29₁₁-29ₖₙ, respectively. When the control unit 22 detects a failure, the control unit 22 causes the 1x2 switches 20₁₁-20ₖₙ and the 2x1 switches 26₁₁-26ₖₙ to change routing of the optical signals from the working system 0 to the standby system 1 in an interlocked manner.

In normal operation, the 1x2 switches 20₁₁-20ₖₙ and the 2x1 switches 26₁₁-26ₖₙ are connected to the OSW24, the working system 0, as indicated by a bold solid line in Fig. 2. If a failure is detected by any one of the monitoring units 28₁₁-28ₖₙ, the control unit 22 controls such that the 1x2 switches 20₁₁-20ₖₙ and the 2x1 switches 26₁₁-26ₖₙ are connected to the OSW 25, the standby system 1, as a bold solid line in Fig. 3 shows.

In this embodiment, a low loss device such as the 1x2 switches 20₁₁-20ₖₙ are used instead of 1x2 optical couplers that come with a 3dB loss, thereby insertion of an optical amplifier to the optical path cross connect apparatus becomes unnecessary, and increase of cost and size are prevented.

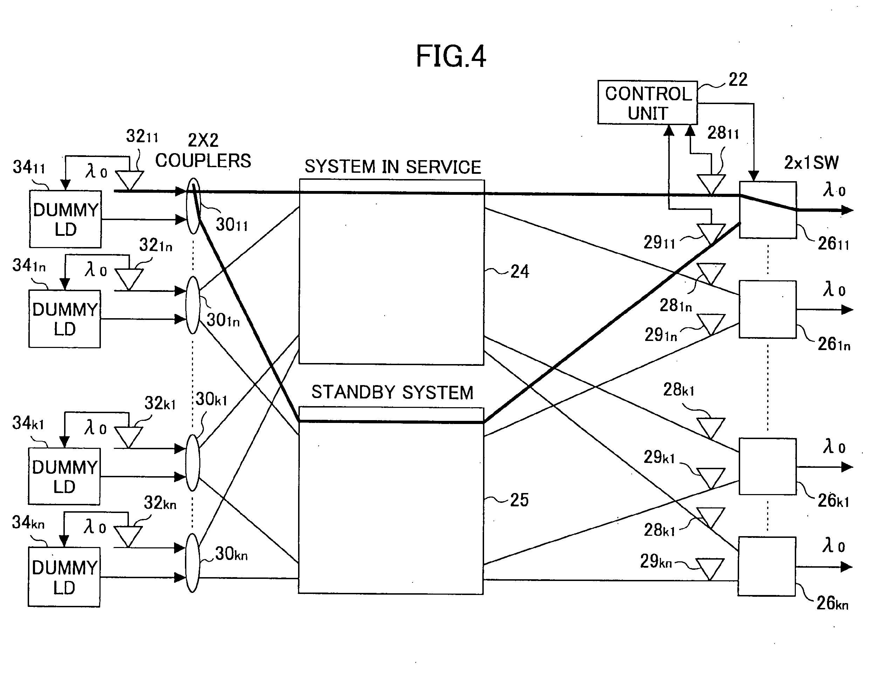

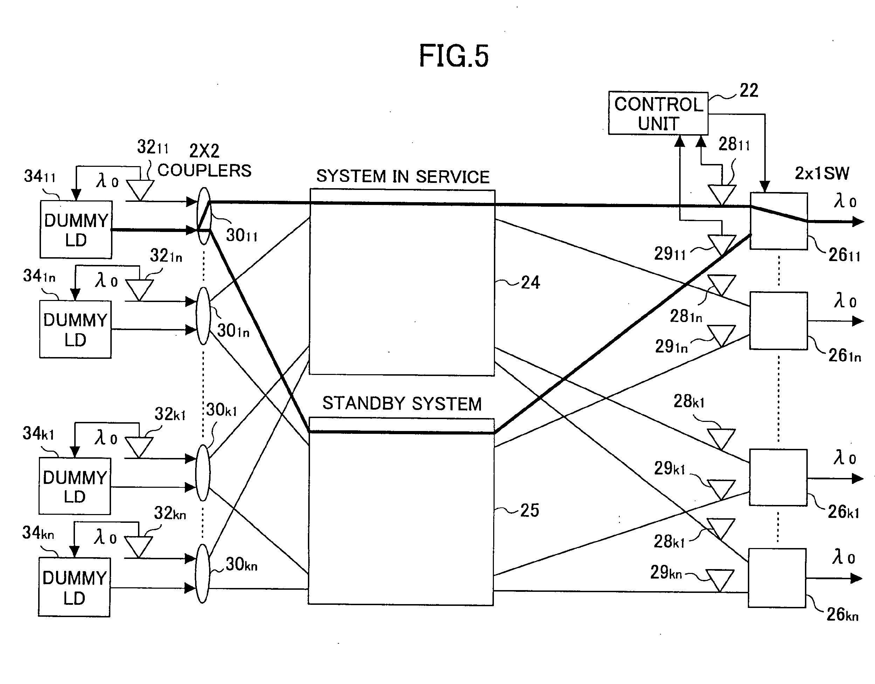

Fig. 4 and Fig. 5 show a block diagram of a second embodiment of the optical path cross connect apparatus with a redundant configuration of the present invention. Where the same components appear in these figures as Fig. 2, the same reference numbers are given, and explanations are omitted. The second embodiment employs 2x2 optical couplers 30₁₁-30ₖₙ instead of the 1x2 switches 20₁₁-20ₖₙ.

In Fig. 4, each of kxn input optical signals is supplied- to a first input port of each of the 2x2 optical couplers 30₁₁-30ₖₙ, and is monitored by each of monitoring units 32₁₁-32ₖₙ. When any one of the input optical signals is not present, the monitoring units 32₁₁-32ₖₙ turn on dummy laser diodes (LD) 34₁₁-34ₖₙ that have an ON/OFF function, and supply dummy optical signals generated by the turned-on dummy laser diodes (LD) 34₁₁-34ₖₙ to a second input port of each of the 2x2 optical couplers 30₁₁-30ₖₙ. That is, an optical signal is surely supplied to either of the input ports of the 2x2 optical couplers 30₁₁-30ₖₙ. Each of the input optical signals is branched into two streams by the 2x2 optical couplers 30₁₁-30ₖₙ, and one each of the two streams is supplied to the OSW 24, the working system 0, and the OSW 25, the standby system 1.

The optical signals that are cross connected and output from the OSW 24 and the OSW 25 are supplied to the 2x1 switches 26₁₁-26ₖₙ. Moreover, the signals output from the OSW 24 and the OSW 25 are monitored by the monitoring units 28₁₁-28ₖₙ and 29₁₁-29ₖₙ, respectively. If a fault is detected by the control unit 22, switching from the OSW 24 to the OSW 25 is performed by switching the 2x1 switches 26₁₁-26ₖₙ.

For example, if any of the monitoring units 28₁₁-28ₖₙ detects an absence of an optical signal during normal operation wherein the 2x1 switches 26₁₁-26ₖₙ are connected to the OSW 24 as a bold solid line shows in Fig. 4, the control unit 22 changes connection of the 2x1 switches 26₁₁-26ₖₙ to the OSW 25 as a bold solid line of Fig. 3 indicates.

In this embodiment, an optical signal is always supplied to the 2x2 optical couplers 30₁₁-30ₖₙ, and branched into two streams such that the optical signal is always supplied to the OSW 24 and the OSW 25. In this manner, stable operation of OSW 24 and the OSW 25 is secured, even if the OSW 24 and the OSW 25 are matrix type switches.

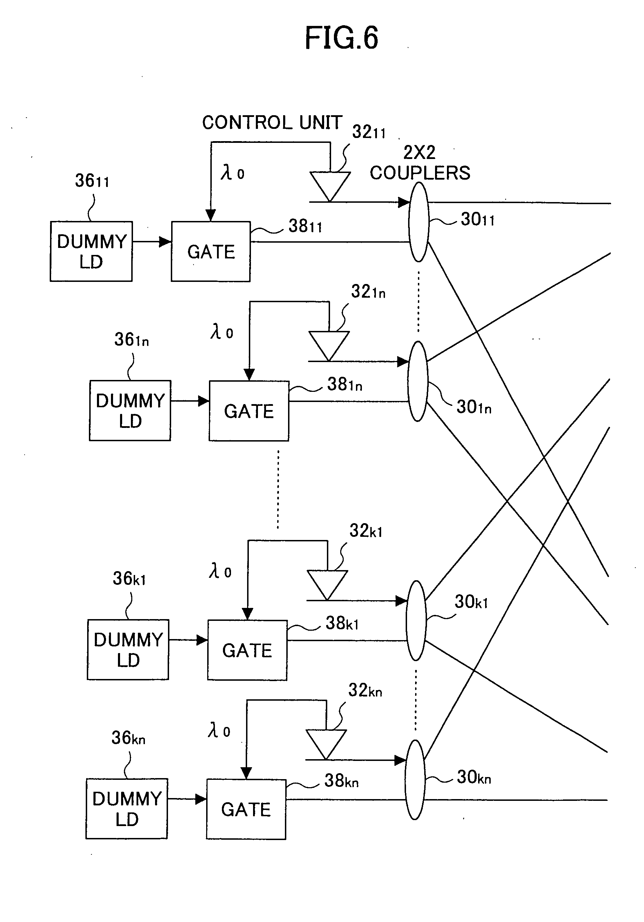

Fig. 6 shows a block diagram of a main part of the optical path cross connect apparatus with a redundant configuration of a third embodiment of the present invention. In Fig. 6, the same reference numbers are given to the same components as Fig. 4, and explanations thereof are omitted. The third embodiment uses dummy laser diodes (LD) 36₁₁-36ₖₙ that are always turned on, and gates 38₁₁-38ₖₙ that open and close according to an output from the monitoring units 32₁₁-32ₖₙ, instead of the dummy laser diodes (LD) 34₁₁-34ₖₙ that have the ON/OFF function. Except for this point, the third embodiment is the same as the second embodiment shown in Fig. 4.

In Fig. 6, when absence of an optical signal is detected concerning any one of the first input ports of the 2x2 optical couplers 30₁₁-30ₖₙ, dummy optical signals generated by the dummy laser diodes (LD) 36₁₁-36ₖₙ are supplied to the second input ports of the 2x2 optical couplers 30₁₁-30ₖₙ through the gates 38₁₁-38ₖₙ that are opened by control of the monitoring units 32₁₁-32ₖₙ.

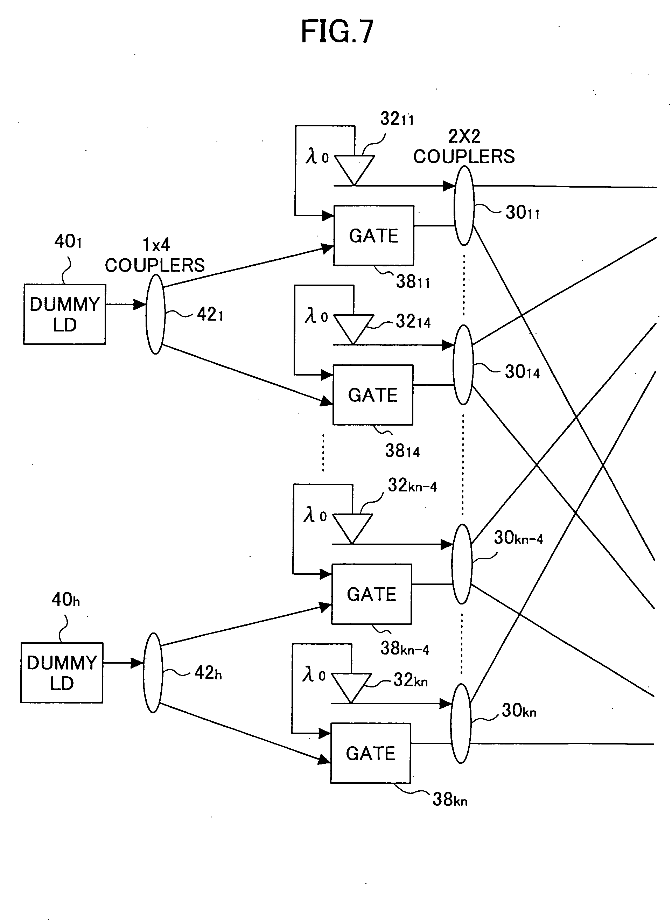

Fig. 7 shows a block diagram of a main part of a fourth embodiment of the optical path cross connect apparatus with a redundant configuration of the present invention. In Fig. 7, the same reference numbers are given to the same components as Fig. 6, and explanations thereof are omitted. This embodiment employs higher-output laser diodes, such as laser diodes having a 4 times as high output power as the dummy laser diode (LD) 36₁₁, instead of the dummy laser diodes (LD) 36₁₁-36ₖₙ. For example, dummy laser diodes (LD) 40₁-40ₕ are capable of outputting an output 4 times as high as the dummy laser diodes (LD) 36₁₁-36ₖₙ. The output is divided into 4 streams by 1x4 optical couplers 42₁-42ₕ, and provided to the gates 38₁₁-38ₖₙ that are controlled by the monitoring units 32₁₁-32ₖₙ. Except for this point, the fourth embodiment is the same as the second embodiment shown in Fig. 4.

In Fig. 7, when input optical signals are not present at the first input ports of the 2x2 optical couplers 30₁₁-30ₖₙ, the gates 38₁₁-38ₖₙ are turned on by the monitoring units 32₁₁-32ₖₙ, and the dummy optical signals from the 1x4 optical couplers 42₁-42ₕ are supplied to the second input port of the 2x2 optical coupler 30₁₁-30ₖₙ through the turned-on gates.

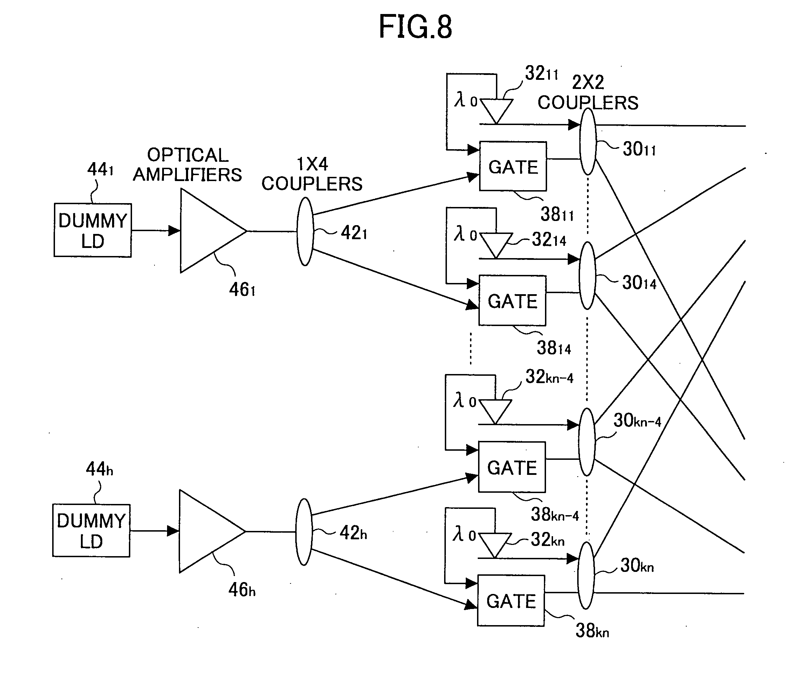

Fig. 8 shows a block diagram of a main part of a fifth embodiment of the optical path cross connect apparatus with a redundant configuration of the present invention. In Fig. 8, the same reference numbers are given to the same components as Fig. 7, and explanations thereof are omitted. Instead of the dummy laser diodes (LD) 40₁-40ₕ of the higher output power, dummy laser diodes (LD) 44₁-44ₕ that are capable of a lower power output and always turned on, and optical amplifiers 46₁-46ₕ are employed in this embodiment. Outputs of the optical amplifiers 46₁-46ₕ are branched into four streams by 1x4 optical couplers 42₁-42ₕ, and supplied to the gates 38₁₁-38ₖₙ. Except for this point, the fifth embodiment is the same as the second embodiment shown in Fig. 4.

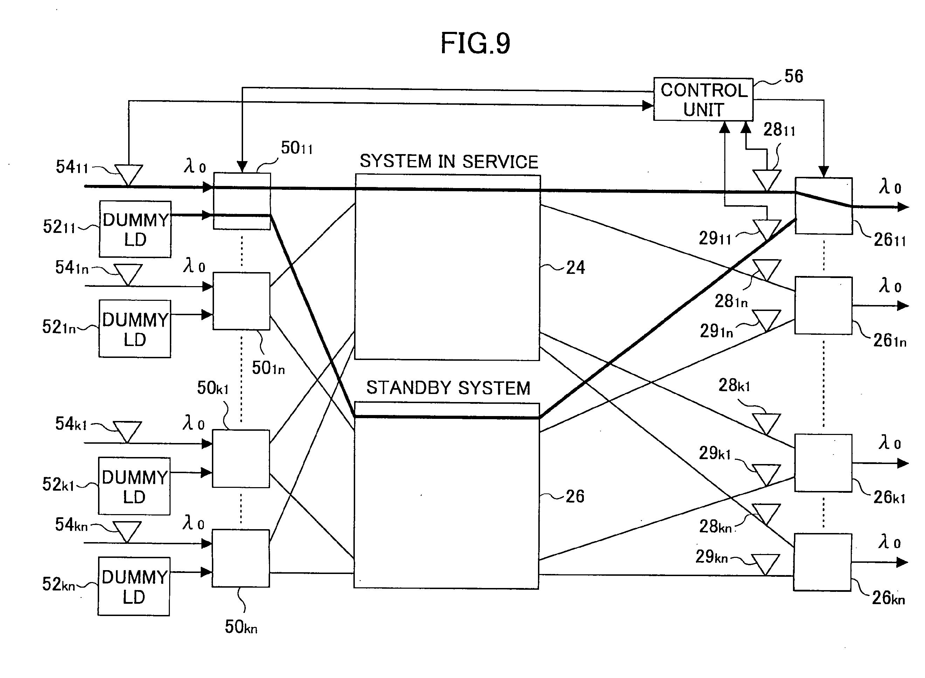

Fig. 9, Fig. 10, and Fig. 11 show a block diagram of a sixth embodiment of the optical path cross connect apparatus with a redundant configuration of the present invention. In these figures, the same reference numbers are given to the same components as Fig. 2, and explanations thereof are omitted. In the sixth embodiment, 2x2 switches 50₁₁-50ₖₙ are used instead of the 1x2 switches 20₁₁-20ₖₙ.

In Fig. 9, kxn input optical signals are supplied to first input ports of the 2x2 switches 50₁₁-50ₖₙ. Further, dummy optical signal signals that dummy laser diodes (LD) 52₁₁-52ₖₙ that are always turned on output are supplied to second input ports of the 2x2 switches 50₁₁-50ₖₙ 2x2.

The first input ports of the 2x2 switches 50₁₁-50ₖₙ are monitored by monitoring units 54₁₁-54ₖₙ, and the monitored signals are supplied to a control unit 56. Under normal operation, the 2x2 switches 50₁₁-50ₖₙ supply the input optical signals supplied to the first input ports to the OSW 24, the working system 0, by control of the control unit 56, and supply the dummy optical signals to the OSW 25, the standby system 1. When an abnormality is present, the dummy optical signals supplied to the second input ports are switched to the OSW 24, the working system 0, and the optical signals supplied to the first input ports are switched to the OSW 25, the standby system 1.

The optical signals cross connected by the OSW 24 and the OSW 25 are supplied to the 2x1 switches 26₁₁-26ₖₙ. Further, the output signals of the OSW 24 and the OSW 25 are monitored by the monitoring units 28₁₁-28ₖₙ and 29₁₁-29ₖₙ, respectively, and supplied to the control unit 56. The control unit 56 is performs switching of the OSW 24 and the OSW 25 by switching the 2x1 switches 26₁₁-26ₖₙ and the 2x2 switches 50₁₁-50ₖₙ, when a fault is detected by the signals supplied from the monitoring units 28₁₁-28ₖₙ, 29₁₁-29ₖₙ, and 54₁₁-54ₖₙ.

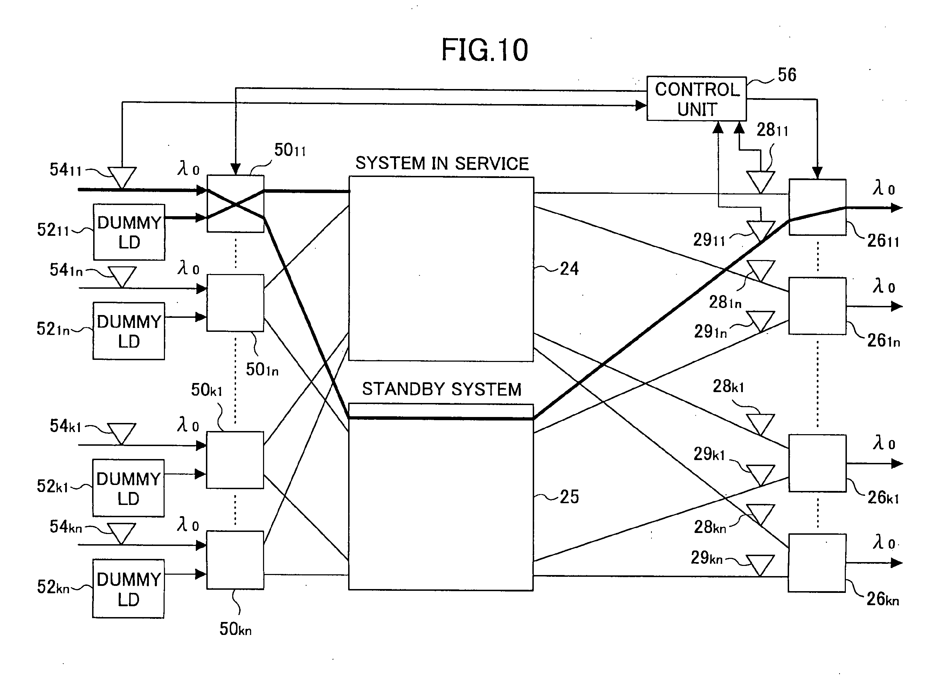

If a fault is detected by any one of the monitoring units 28₁₁-28ₖₙ during normal operation, that is, while the input optical signals provided to the first input ports of the 2x2 switches 50₁₁-50ₖₙ are supplied to the OSW 24, and the dummy optical signals provided to the second input ports of the switches are supplied to the OSW 25, as two bold solid lines show in Fig. 9, the control unit 22 switches such that the 2x1 switches 26₁₁-26ₖₙ output signals from the OSW 25, and the input optical signals to the first input ports of the 2x2 switches 50₁₁-50ₖₙ are provided to the OSW 25, and the dummy optical signals provided to the second input ports of the 2x2 switches 50₁₁-50ₖₙ are provided to the OSW 24 as shown in Fig. 10.

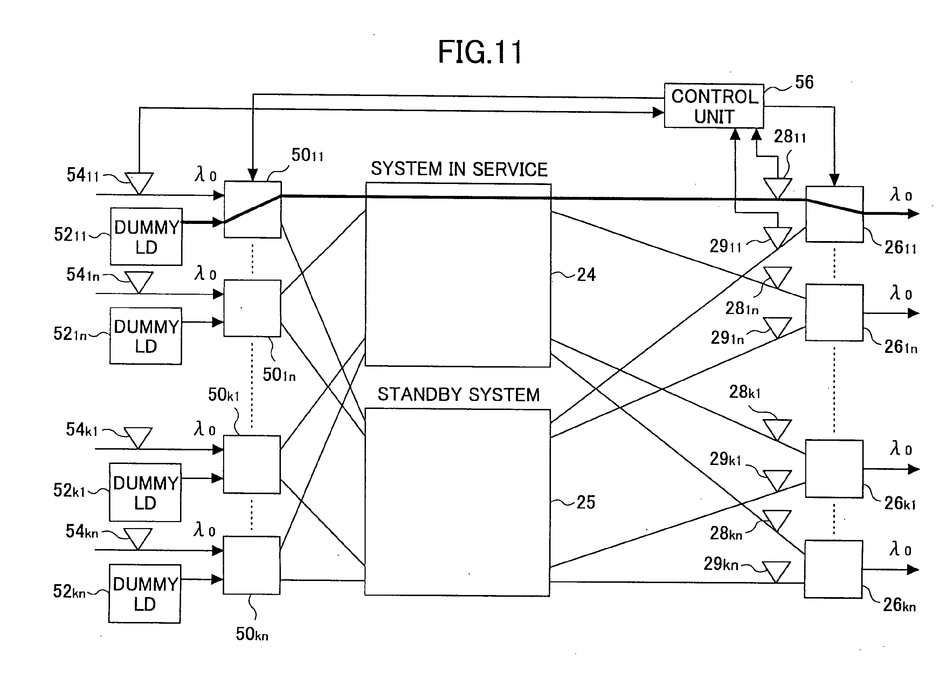

Further, if absence of an optical signal is detected by a monitoring unit, for example, if the monitoring unit 54₁₁ detects absence of an optical signal to the first input port of the 2x2 switch 50₁₁ under the normal operating condition as described above, the control unit 22 switches such that the dummy optical signals provided to the second input ports of the 2x2 switches 50₁₁-50ₖₙ are supplied to the OSW 24, as a bold solid line shows in Fig. 11, while providing the OSW 25 with the optical signals provided to the first input ports. In this manner, stable operation of the OSW 24 is assured, when an optical signal returns to the first input port of the 2x2 switch 50₁₁, and the 2x2 switches 50₁₁-50ₖₙ are also resumed to the status shown in Fig. 9.

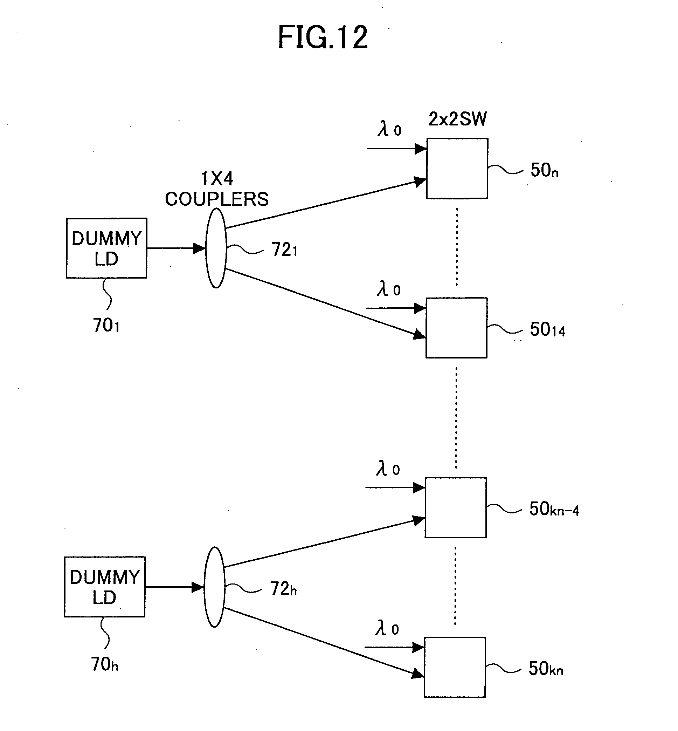

Fig. 12 shows a block diagram of a main part of a seventh embodiment of the optical path cross connect apparatus with a redundant configuration of the present invention. In Fig. 12, the same reference numbers are given to the same components as Fig. 9, and explanations thereof are omitted. This embodiment employs high-power laser diodes 70₁-70ₕ that are capable of outputting, for example, 4 times as high output power as a dummy laser diode (LD) 52₁₁, instead of the dummy laser diodes (LD) 52₁₁-52ₖₙ. The high-power laser diodes 70₁-70ₕ are always turned on, and generate dummy optical signals, each of which is branched into four streams by 1x4 optical couplers 72₁-72ₕ. The dummy optical signals output from the 1x4 optical couplers 72₁-72ₕ are supplied to the second input ports of the 2x2 switches 50₁₁-50ₖₙ. Except for this point, other composition is the same as the sixth embodiment shown in Fig. 9.

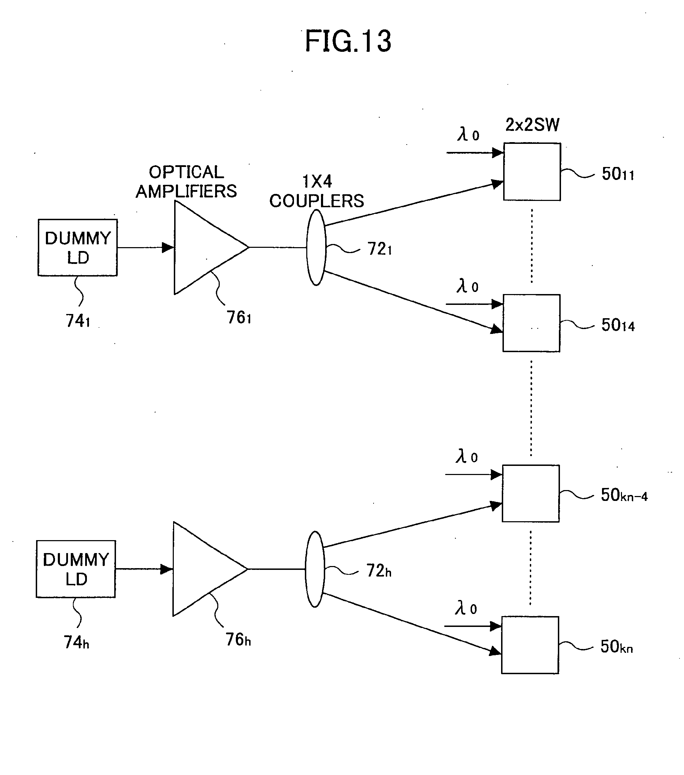

Fig. 13 shows a block diagram of a main part of an eighth embodiment of the optical path cross connect apparatus with a redundant configuration of the present invention. In Fig. 13, the same reference numbers are given to the same components as Fig. 12, and explanations thereof are omitted. In the eighth embodiment, instead of the high-power dummy laser diodes 70₁-70ₕ, dummy laser diodes 74₁-74ₕ that are always turned on and optical amplifiers 76₁-76ₕ are employed. Outputs from the optical amplifiers 76₁-76ₕ are provided to the second input ports of the 2x2 switches 50₁₁-50ₖₙ. Except for this point, other compositions are the same as the sixth embodiment shown in Fig. 9.

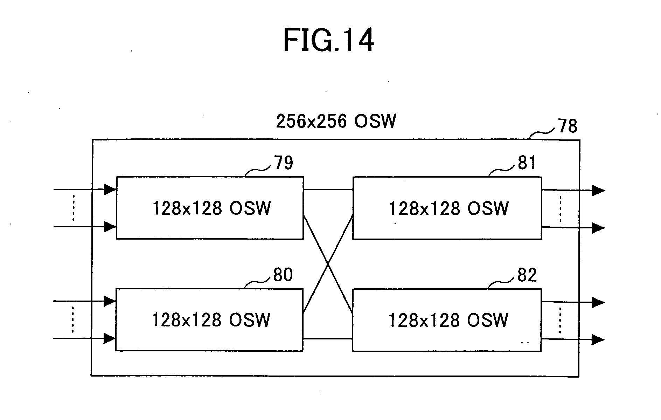

Fig. 14 shows a block diagram of a variation of the OSW used in the present invention. An OSW 78 that cross connects 256x256 waves includes OSW 79, OSW 80, OSW 81 and OSW 82, arranged into a two-step configuration, and each of which being capable of cross connecting 128x128 waves. A multistep configuration, such as this, enables relatively small OSWs to structure a relatively large OSW.

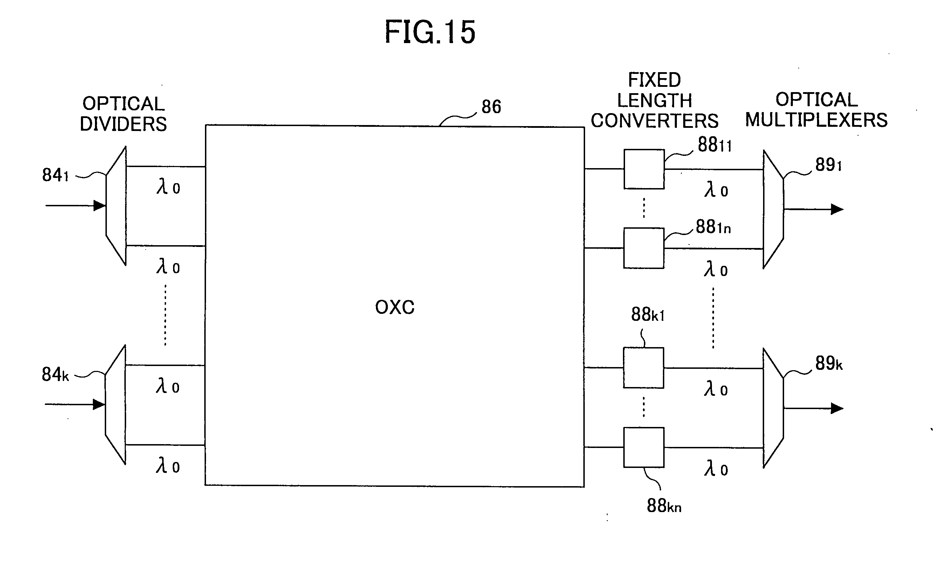

Fig. 15 shows a block diagram of a WDM interface to which the optical path cross connect apparatus with a redundant configuration of the present invention is applied. In Fig. 15, each of k optical fibers (k=8, for example) provides an optical signal that includes n optical signals (n=32, for example) that are wavelength multiplexed to each of optical dividers 84₁-84ₖ. Thus, there are kxn (8x32=256, in this example) optical signals that are supplied to an optical path cross connect apparatus (OXC) 86. The kxn optical signals are cross connected, and supplied to fixed wavelength converters 88₁₁-88ₖₙ that convert the supplied optical signals into predetermined wavelength, and output to adders 89₁-89ₖ. The adders 89₁-89ₖ assemble the output signals into k WDM signals, and output to k optical fibers.

In order to facilitate path tracing, a direct modulation or an indirect modulation may be applied to each of the dummy laser diodes (LD) 34₁₁-34ₖₙ, 36₁₁-36ₖₙ, 40₁-40ₕ, 44₁-44ₕ, 52₁₁-52ₖₙ, 70₁-70ₕ, and 74₁-74ₕ. In this manner, identifying an input port, optical signal of which has an abnormality, is facilitated.

As described above, this embodiment enables to reduce loss in the entire apparatus and to suppress increases in cost and dimensions of the apparatus. In addition, operation of an OSW that requires a constant supply of an optical signal is stabilized.

Following embodiments relate to a switching method that realizes an in-service modification of an optical path cross connect apparatus. Conventionally, when insertion of an optical amplifier is needed due to increase in loss, etc., for example, in making switch capacity increase, a conventional optical path cross connect apparatus as shown in Fig. 1 has to stop service during insertion of the optical amplifier and upgrading. This-problem is solved by following embodiments of the switching method.

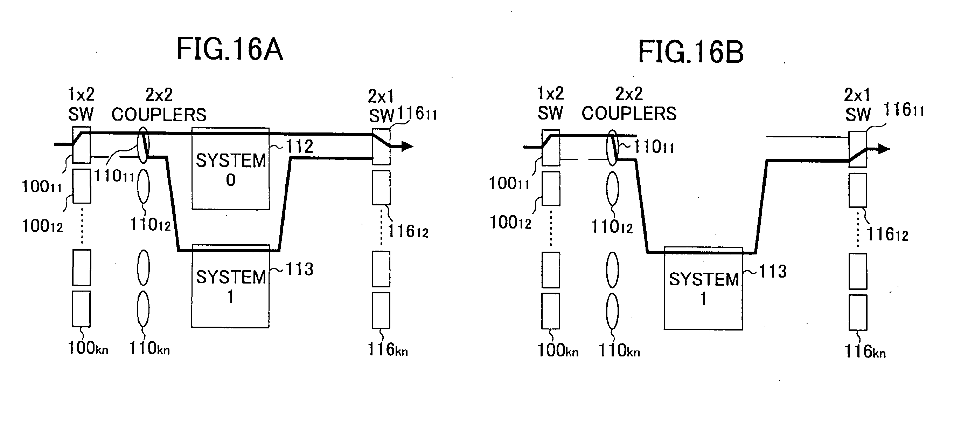

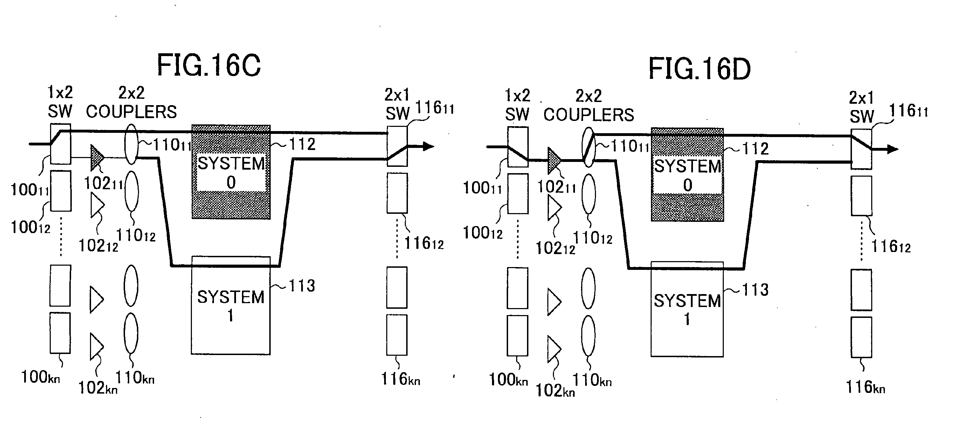

Fig. 16(A), Fig. 16(B), Fig. 16(C), and Fig. 16(D) show figures for explaining a first embodiment of the switching method of the present invention, relative to an optical path cross connect apparatus with a redundant configuration. This embodiment- applies to the case where an in-service upgrading is performed, accompanied with insertion of an optical amplifier on an input side of an OSW system 0 that is in service.

As shown in Fig. 16 (A), each of wavelength-multiplexed optical signals supplied by k optical fibers is divided into n signals based on wavelength, resulting in kxn optical signals. The kxn optical signals are supplied to 1x2 switches 100₁₁-100ₖₙ. First output ports of the 1x2 switches 100₁₁-100ₖₙ supply the input optical signals to 2x2 optical couplers 110₁₁-110ₖₙ during normal operation. The 2x2 optical couplers 110₁₁-110ₖₙ divide the input optical signals into two streams, and supplies one of the streams to the system 0 OSW 112, which is in service, and the other of the streams to a system 1 OSW 113, a standby system. The optical signals are cross connected by the OSW 112 and OSW 113, and then supplied to 2x1 switches 116₁₁-116ₖₙ. The 2x1 switches 116₁₁-116ₖₙ select signals from the system 0 OSW 112, the system in service, during the normal operation.

In order to upgrade the apparatus, in the first place, the 2x1 switches 116₁₁-116ₖₙ are switched to receive the optical signals from the system 1 OSW 113, the standby system. Then, the system 0 OSW 112 is removed as shown in Fig. 16 (B).

Next, as shown in Fig. 16 (C), while the OSW 112 is replaced and upgraded, optical amplifiers 102₁₁-102ₖₙ are inserted between second output ports of the 1x2 switches 100₁₁-100ₖₙ and the 2x2 optical couplers 110₁₁-110ₖₙ.

Then, as shown in Fig. 16 (D), the 2x1 switches 116₁₁-116ₖₙ are switched to receive the optical signals from the replaced system 0 OSW 112, and, in this manner, the in-service upgrade is completed.

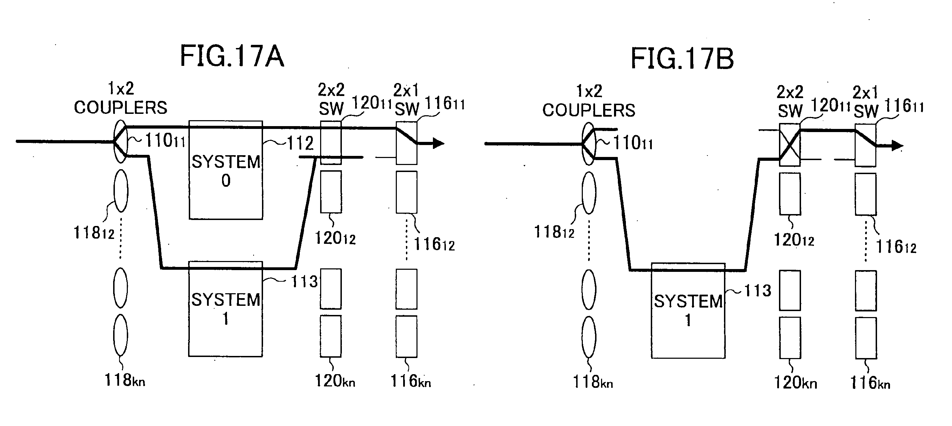

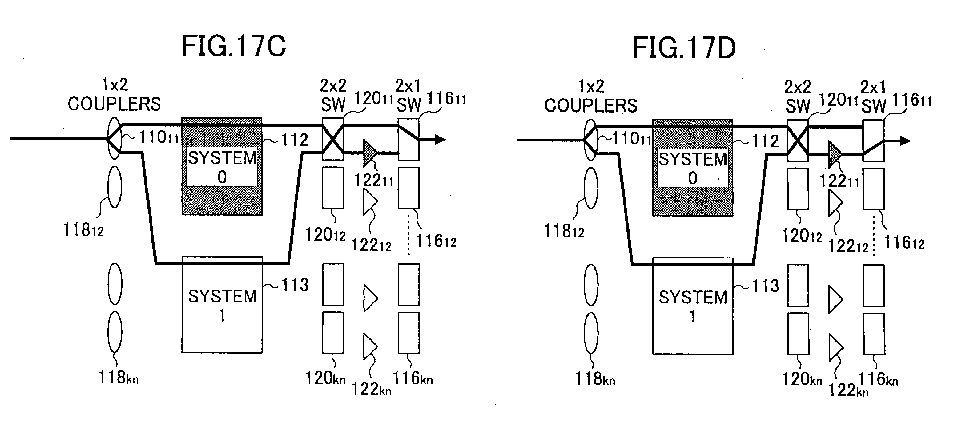

Fig. 17(A), Fig. 17(B), Fig. 17(C), and Fig. 17(D) show figures for explaining a second embodiment of the switching method of the present invention, applicable to an optical path cross connect apparatus with a redundant configuration. This embodiment shows the case where optical amplifiers are inserted on an output side of a system 0 OSW that is in service, in connection with an in-service upgrade.

As shown in Fig. 17 (A), each of wavelength-multiplexed optical signals supplied by k optical fibers is divided into n signals based on wavelength, resulting in kxn optical signals. The kxn optical signals are supplied to 1x2 optical couplers 118₁₁-118ₖₙ. The 1x2 optical couplers 118₁₁-118ₖₙ divide the input optical signals into two streams, and supply one stream to the system 0 OSW 112, a system in service, and the other stream to the OSW 113, a standby system 1. The OSW 112 and the OSW 113 cross connect the optical signals, and supply outputs to first input ports and second input ports of 2x2 switches 120₁₁-120ₖₙ, respectively.

First output ports of the 2x2 switches 120₁₁-120ₖₙ output the optical signals from the OSW 112, while second output ports outputting the optical signal from the OSW 113 during normal operation. The both output ports are connected to two input ports of 2x1 switches 116₁₁-116ₖₙ. The 2x1 switches 116₁₁-116ₖₙ select and output the optical signal from the OSW 112 during the normal operation.

In order to upgrade the apparatus, in the first place, the 2x2 switches 120₁₁-120ₖₙ are switched such that the optical signals from the OSW 112 are output from the second output ports, while the optical signals from the OSW 113 are output from the first output ports. The, the OSW 112 is removed as shown in Fig. 17 (B),

Next, as shown in Fig. 17 (C), while exchanging and upgrading the OSW 112, optical amplifiers 122₁₁-122ₖₙ are inserted between the second output port of the 2x2 switches 120₁₁-120ₖₙ and the 2x1 switches 116₁₁-116ₖₙ.

Then, as shown in Fig. 17 (D), the 2x1 switches 116₁₁-116ₖₙ are switched such that the optical signal from the OSW 112 are selected, and, in this manner, the in-service upgrade is completed.

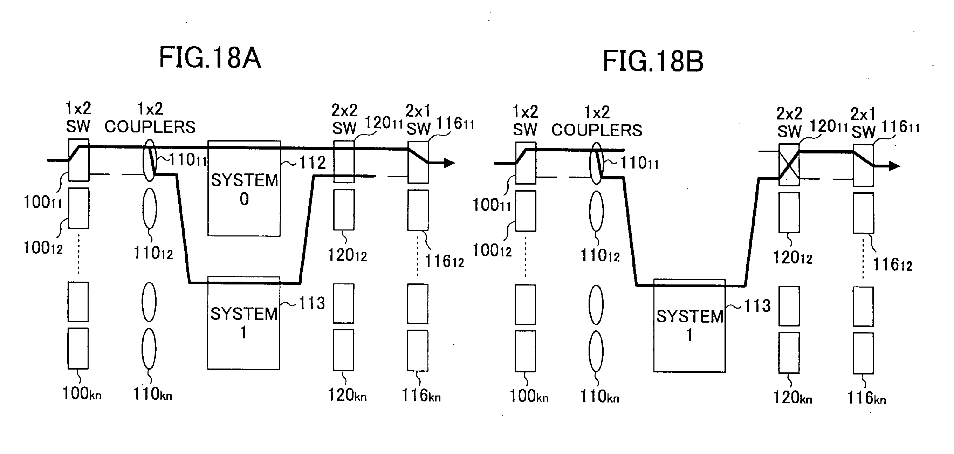

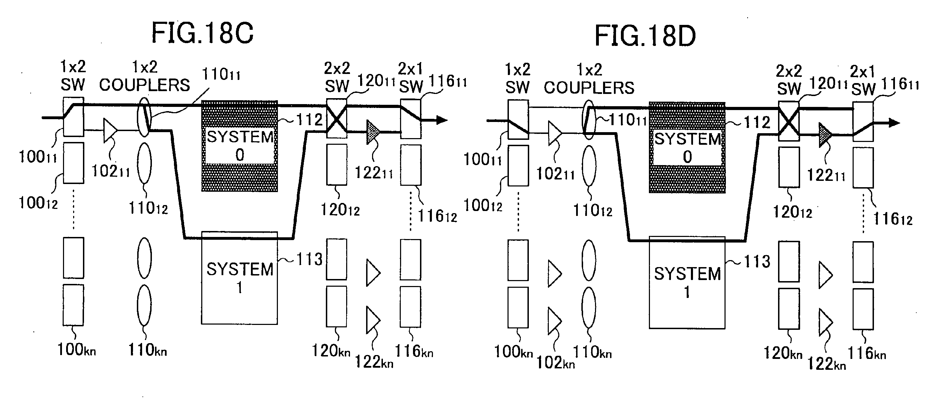

Fig. 18(A), Fig. 18(B), Fig. 18(C), and Fig. 18(D) show figures for explaining a third embodiment of the switching method of the present invention, relative to an optical path cross connect apparatus with a redundant configuration. This embodiment shows the case where optical amplifiers are inserted on both input and output sides of a system 0, an OSW in service, in connection with an in-service upgrade.

As shown in Fig. 18 (A), each of wavelength-multiplexed optical signals supplied by k optical fibers is divided into n signals based on wavelength, resulting in kxn optical signals. The kxn optical signals are supplied to 1x2 switches 100₁₁-100ₖₙ. The optical signals input to the 1x2 switches 100₁₁-100ₖₙ are output from first output ports of the 1x2 switches 100₁₁-100ₖₙ to 2x2 optical couplers 110₁₁-110ₖₙ during normal operation. The 2x2 optical couplers 110₁₁-110ₖₙ divide the input optical signals into two streams, one of which is supplied to a system 0 OSW 112, a system in service, with the other stream being supplied to a system 1 OSW 113, a standby system 1. The optical signals are cross connected by the OSW 112 and the OSW 113, and supplied to first and second input ports, respectively, of 2x2 switches 120₁₁-120ₖₙ.

The 2x2 switches 120₁₁-120ₖₙ output the optical signal supplied from the system 0 OSW 112 from first output ports during the normal operation, while outputting the optical signals from the system 1 OSW 113 from second output ports. Each of the output signals is supplied to each of two input ports of 2x1 switches 116₁₁-116ₖₙ. The 2x1 switches 116₁₁-116ₖₙ select and output the optical signal from OSW 112 during the normal operation.

In order to upgrade the apparatus while in service, at the first instance, the 2x2 switches 120₁₁-120ₖₙ are controlled such that the optical signal from the system 0 OSW 112 are output from the second output ports, and the optical signal from the system 1 OSW 113 are outputted from the first output ports. Then, the system 0 OSW 112 is removed as shown in Fig. 18 (B).

Next, as shown in Fig. 18 (C), while exchanging and upgrading the system 0 OSW 112, optical amplifiers 102₁₁-102ₖₙ are inserted between the second output ports of the 1x2 switch 100₁₁-100ₖₙ and the 2x2 optical coupler 110₁₁-110ₖₙ. Further, optical amplifiers 122₁₁-122ₖₙ are inserted between the second output ports of the 2x2 switch 120₁₁-120ₖₙ and the 2x1 switches 116₁₁-116ₖₙ.

Then, as shown in Fig. 18 (D), 2x1 switch 116₁₁-116ₖₙ are switches such that the optical signals from the system 0 OSW 112 are selected, and, in this manner, the in-service upgrade is completed.

Thus, this embodiment realizes upgrading that includes insertion of optical amplifiers without stopping operation of optical path cross connection. By not installing the optical amplifiers directly to an OSW, the number of the optical amplifiers is halved. While a 1x2 switch and the like are installed to each channel, an overall cost is suppressed, because the optical amplifiers are more expensive than the 1x2 switches. Dimension of an optical path cross connect apparatus is also suppressed, according to this embodiment.

It is remarked that each of the 1x2 switches 20₁₁-20ₖₙ and 100₁₁-100ₖₙ corresponds to a 1x2 optical switch described in a claim, each of the OSW 24, and the OSW 112 corresponds to the optical switch of a system in service and each of the OSW 25 and the OSW 113 corresponds to the optical switch of a reserve system in a claim. Further, each of the 2x2 optical couplers 30₁₁-30ₖₙ and 110₁₁-110ₖₙ corresponds to a 2x2 optical coupler, and each of the 2x2 switches 50₁₁-50ₖₙ and 120₁₁-120ₖₙ corresponds to a 2x2 optical switch in a claim. Each of the monitoring units 28₁₁-28ₖₙ and 29₁₁-29ₖₙ corresponds to the first monitoring units in a claim, and the control unit 22 corresponds to a control unit in a claim. Each of the monitoring units 32₁₁-32ₖₙ corresponds to the second monitoring unit, each of the monitoring units 54₁₁-54ₖₙ corresponds to the third monitoring unit in a claim. Each of the 2x1 switches 116₁₁-116ₖₙ corresponds to a 2x1 optical switch, and each of the 1x2 optical couplers 118₁₁-118ₖₙ corresponds to a 2x2 optical coupler in a claim.

As mentioned above, according to the present invention, insertion of an optical amplifier is dispensed with by using a low loss 1x2 or 2x2 optical switch, and increase of cost and dimensions of an optical path cross connect apparatus can be suppressed.

Further, continuous cross connect-operation is realized when a fault occurs in a system in service by automatically switching from the system in service to a standby system. Providing a dummy optical signal to a standby system ensures a smooth switching.

The present invention further provides a method to upgrade the optical path cross connect apparatus, which may include insertion of an optical amplifier, without stopping service.

Further, the present invention is not limited to these embodiments, but various variations and modifications may be made without departing from the scope of the present invention.

The present application is based on Japanese priority application No. 2001-396247 filed on 12, 27, 2001 with the Japanese Patent Office, the entire contents of which are hereby incorporated by reference.

## Claims

1. An optical path cross connect apparatus, wherein a plurality of input optical signals are cross connected by a first optical switch that serves normal operation and by a second optical switch that is a standby switch, and the cross connected optical signals by one of the first optical switch and the second optical-switch are selected and output by a plurality of 2x1 optical switches, comprising a plurality of 1x2 optical switches that divide the input optical signals into two streams in one of 1:p ratio and p:1 ratio, where p is greater than 1, and one of the two streams is supplied to the first optical switch, and the other is supplied to the second optical switch.

2. An optical path cross connect apparatus, wherein a plurality of input optical signals are cross connected by a first optical switch that serves normal operation and by a second optical switch that is a standby switch, and the cross connected optical signals by one of the first optical switch and the second optical switch are selected and output by a plurality of 2x1 optical switches, comprising a plurality of 2x2 optical couplers each of which receives one of the input optical signals through a first input port, and, if there is no input optical signal present, receives a dummy optical signal through a second input port, and divides the received optical signal into two streams, one of the streams being provided to the first optical switch, and the other being provided to the second optical switch.

3. An optical path cross connect apparatus, wherein a plurality of input optical signals are cross connected by a first optical switch that serves normal operation and by a second optical switch that is a standby switch, and the cross connected optical signals by one of the first optical switch and the second optical switch are selected and output by a plurality of 2x1 optical switches, comprising a plurality of 2x2 switches each of which receives one of the input optical signals through a first input port and outputs to one of the first optical switch and the second optical switch, and receives a dummy optical signal through a second input port and outputs to either of the optical switches, which is not provided with the input optical signals.

4. An optical path cross connect apparatus, wherein a plurality of input optical signals are cross connected by a first optical switch that serves normal operation and by a second optical switch that is a standby switch, and the cross connected optical signals by one of the first optical switch and the second optical switch are selected and output by a plurality of 2x1 optical switches, comprising:
a plurality of first monitoring units that detect presence of optical signals supplied to the plurality of the 2x1 optical switches, and
a control unit that switches between the first optical switch and the second optical switch based on outputs from the first monitoring units.

5. The optical path cross connect apparatus as claimed in claim 2, further comprising a plurality of second monitoring units that detect presence of the plurality of input optical signals, failing in which, the dummy optical signals are provided to the 2x2 optical couplers.

6. The optical path cross connect apparatus as claimed in claim 3, further comprising a plurality of third monitoring units that detect the plurality of input optical signals, failing in which, the 2x2 optical switches are switched [such that the dummy optical signals are output].

7. The optical path cross connect apparatus as claimed in claim 2, wherein each of the dummy optical signals to be supplied to each of the 2x2 optical couplers is generated by a dummy optical source independent of other dummy optical sources.

8. A switching method of an optical path cross connect apparatus that comprises
a plurality of 1x2 optical switches each of which outputs an input optical signal from one of a first output port and a second output port,
a plurality of 2x2 optical couplers each of which receives the optical signal output from one of the first output port and the second output port of the 1x2 optical switch, divides the optical signal into two streams, and supplies each of the two streams to a first optical switch and a second optical switch, and
a plurality of 2x1 optical switches each of which receives an optical signal cross connected by the first optical switch to a first input port, receives an optical signal cross connected by the second optical switch to a second input port, and outputs one of the two optical signals, comprising:
selecting one of the optical signal input from the first input port and the optical signal input from the second input port as an output of the 2x1 optical switch,
changing one of the first optical switch and the second optical switch, whose output optical signal is not selected,
inserting an optical amplifier between an output port that is not engaged with outputting of the 1x2 optical switch and the 2x2 optical coupler,
selecting the other of the optical signal input from the first input port and the optical signal input from the second input port as an output of the 2x1 optical switch, and
switching so that an optical signal is outputted from the output port of the 1x2 optical-switch, to which the optical amplifier is inserted.

9. A switching method of an optical path cross connect apparatus that comprises
a plurality of 1x2 optical couplers each of which receives an input optical signal, divides the input optical signal into two streams, one being provided to a first optical switch and the other being provided to a second optical switch,
a plurality of 2x2 optical switches each of which receives an optical signal cross connected by the first optical switch at a first input port and outputs to one of a first output port and a second output port, and receives an optical signal cross connected by the second optical switch at a second input port and outputs to one of the second output port and the first output port, which is not carrying the optical signal cross connected by the first optical switch, and
a plurality of 2x1 optical switches each of which receives the optical signal from the first and the second output port of the 2x2 optical switch to a first and a second input ports, respectively, and outputs one of the optical signals, comprising:
selecting one of an optical signal cross connected by the first optical switch and an optical signal cross connected by the second optical switch at the 2x2 optical switch and the 2x1 optical switch,
then, changing one of the first optical switch and the second optical switch, whose cross connected signal is not selected,
inserting an optical amplifier between the 2x2 optical switch and one of input ports of the 2x1 optical switch, whose input is not selected, and
then, selecting an optical signal output from the optical amplifier as an input to the 2x1 optical switch.

10. A switching method of an optical path cross connect apparatus that comprises
a plurality of 1x2 optical switches each of which outputs an input optical signal to one of output ports,
a plurality of 2x2 optical couplers each of which receives the optical signal from one of the output ports of the 1x2 optical switch, and divides into two streams, and provides each stream to a first optical switch and a second optical switch,
a plurality of 2x2 optical switches each of which receives an optical signal cross connected by the first optical switch at a first input port and outputs to one of a first output port and a second output port, and receives an optical signal cross connected by the second optical switch at a second input port and outputs to an output port that is not used by the optical signal cross connected by the first optical switch, and
a plurality of 2x1 optical switches each of which receives the optical signals output from the 2x2 optical switch and outputs one of the optical signals, comprising:
selecting one of the optical signal output from the first optical switch and the optical signal output from the second optical switch,
then, changing one of the first optical switch and the second optical switch, whose output optical signal is not selected,
inserting a first optical amplifier between an output port of the 1x2 optical switch, which does not output and the 2x2 optical coupler,
inserting a second optical amplifier between the 2x2 optical switch and an input port of the 2x1 optical switch, which is not selected,
then, selecting an output port of the 1x2 optical switch, to which the first optical amplifier is inserted, and
selecting an input port of the 2x1 optical switch, to which the second optical amplifier is inserted.

11. The optical path cross connect apparatus as claimed in claim 3, wherein each of the dummy optical signals provided to the 2x2 optical switches is modulated by a unique signal.

12. The optical path cross connect apparatus as claimed in claim 5, further comprising a dummy optical signal source that outputs the dummy optical signal when any one of the second monitoring units fails in detecting an input optical signal.

13. The optical path cross connect apparatus as claimed in claim 5, further comprising:
a dummy optical signal source that outputs the dummy optical signal, and
a gate that outputs the dummy optical signal from the dummy optical signal source when an input optical signal is not detected by any one of the second monitoring units .

14. The optical path cross connect apparatus as claimed in claim 3, further comprising a dummy optical signal source that outputs the dummy optical signal.

15. The optical path cross connect apparatus as claimed in claim 12, wherein the dummy optical signal source is configured such that a dummy optical signal is divided into a plurality of dummy optical signals by an optical coupler.

16. The optical path cross connect apparatus as claimed in claim 13, wherein the dummy optical signal source is configured such that a dummy optical signal is divided into a plurality of dummy optical signals by an optical coupler.

17. The optical path cross connect apparatus as claimed in claim 14, wherein the dummy optical signal source is configured such that a dummy optical signal is divided into a plurality of dummy optical signals by an optical coupler.
